# EUROPEAN PATENT SPECIFICATION

(11) **EP 2 653 525 B1**
(45) Date of publication and mention of the grant of the patent: **16.05.2018**
(21) Application number: 13397510.2
(22) Date of filing: 18.04.2013
(51) Int. Cl.: C10J 3/00, C10J 3/30

(54) **Gasifier**
Vergaser
Gazogene

(30) Priority: 20.04.2012 FI 20125432
(43) Date of publication of application: 23.10.2013
(73) Proprietor: Volter Oy, 90450 Kempele (FI)
(72) Inventor: Kaaresto, Jani, 90900 Kiiminki (FI); Ylikoski, Iikka, 90580 Oulu (FI); Haapakoski, Jarno, 90450 Kempele (FI)
(74) Representative: Berggren Oy, Tampere

(56) References cited:
- WO-A1-02/46331
- WO-A1-2008/059109
- WO-A2-2010/114400
- GB-A- 456 111

## Description

### Field of the invention

The invention relates to a gasifier for gasifying solid fuel.

### Background of the invention

Gasifiers of prior art for gasifying wood-based solid fuel normally comprise a container-like frame enclosing a pyrolysis space separated by a grate or the like, in which space the fuel is gasified by burning the fuel incompletely under oxygen deficiency. A fuel intake duct extending from the top of the frame downwards, and combustion air ducts for the combustion air needed in the gasifying process, extend to the pyrolysis space inside the frame. The pyrolysis space is typically provided at the lower end of the fuel intake duct in such a way that a ring-like blanking plate is provided in the vicinity of the end of the duct, inside the duct. Its function is to decelerate, in a suitable way, the flow of the fuel onto the grate placed underneath the inlet pipe so that there is sufficient time for the fuel to be gasified and become ash before the grate. Combustion air ducts normally extend both to the outer rim of the blanking plate (outer fuel ducts) and to the centre of the blanking plate (inner fuel duct). Normally, there are several outer combustion air ducts, and they extend from the top of the frame downwards in the direction of the fuel intake duct, and are directly connected to the fuel intake duct via holes above the blanking plate. Typically, one inner combustion air duct is provided, and it extends upwards from the bottom of the frame, via an opening in the centre of the blanking plate, to the same location in the vertical direction as the outer combustion air ducts extending from above. The outer combustion air ducts are normally placed around the wall of the fuel intake duct, in the vicinity of the wall, and the combustion air duct coming from below is in the centre of the hole in the blanking plate. Thanks to such an arrangement, a suitable amount of heat can be transferred from the wall of the fuel intake duct to the outer combustion air ducts and thereby to the incoming combustion air; in this way, the combustion air coming into the pyrolysis space of the gasifier can be preheated. In a corresponding way, air flowing inside the inner combustion air duct is heated, among other things, by hot ashes dropping into the ash space in the bottom of the frame and enclosing the inner combustion air duct in the ash space. Another advantage in such an arrangement of the combustion air ducts is the fact that in this way, the amount of air needed in the pyrolysis process can be mixed as evenly as possible with the solid fuel supplied into the pyrolysis chamber, whereby it is secured that the fuel is gasified as evenly as possible. The Documents WO 02/46331, WO 2010/114400 and WO 2008/059109 show gas generators for the gasification of solid fuel.

Document GB 456111 shows a gas producer having multiple tubular nozzles introduced into the fixed bed through the upper end wall of the gas producer.

However, the structure of the state of art has the disadvantage that the fuel intake duct which is heated by the gasification of the fuel, becomes significantly longer than the outer combustion air channels extending to its end from above, because the air flowing inside them keeps them colder than the fuel intake duct. As a result, a tensile stress is formed in the combustion air ducts, and a compression stress is formed in the fuel intake duct. The combustion air ducts which remain cold usually stand this stress state without deformations, because their material is at such a temperature that it maintains its strength almost the same as at room temperature. However, during the operation of the gasifier, the temperature of the wall of the fuel intake duct is very high (even about 1200°C), wherein its material has lost most of its strength. As a result, permanent deformations easily take place in the fuel intake duct. These deformations, in turn, cause a new stress state between the fuel intake duct and the combustion air supply ducts when there is a pause in the operation of the gasifier and the fuel intake duct cools down. In long-term use, these stress states between the fuel intake duct and the combustion air ducts gradually fatigue the material of the wall of the fuel intake duct as well as the joints between the combustion air supply ducts and the fuel intake duct in such a way that after a use period of a given length, these parts of the gasifier finally need to be repaired.

### Brief summary of the invention

It is an aim of the invention to provide a novel gasifier, in which the fuel intake duct has a structure that is stronger and more durable than before.

The aim of the invention is achieved by a gasifier in which the fuel intake duct and the combustion air ducts are connected to the frame of the gasifier by such a fastening that the fuel intake duct can freely elongate by thermal expansion, irrespective of the combustion air ducts, whereby above described stresses or deformations resulting from these are not generated between the combustion air ducts and the fuel intake duct. More precisely, the gasifier according to the invention is characterized in what will be presented in the independent claim 1. The dependent claims will present some preferred embodiments of the gasifier according to the invention.

The gasifier according to the invention has the advantage that its fuel intake duct and combustion air ducts are more durable than before, and therefore, the gasifier needs less maintenance and repair than before. Also, the structure of the combustion air ducts of the gasifier as such becomes simpler than before, because the combustion air ducts are no longer conveyed through the wall of the fuel intake duct and connected to the fuel intake duct. Furthermore, the material and manufacturing costs of the gasifier are reduced, because the loads on the fuel intake duct have been found to reduce so much that it has been possible to reduce the wall thickness of the fuel intake duct, with respect to the thickness before.

### Description of the drawings

In the following, the invention will be described in more detail with reference to the appended drawings, in which
Fig. 1 shows a gasifier according to the invention in a slanted view from the side,
Fig. 2 shows a vertical cross-section of the gasifier according to Fig. 1.

### Detailed description of the invention

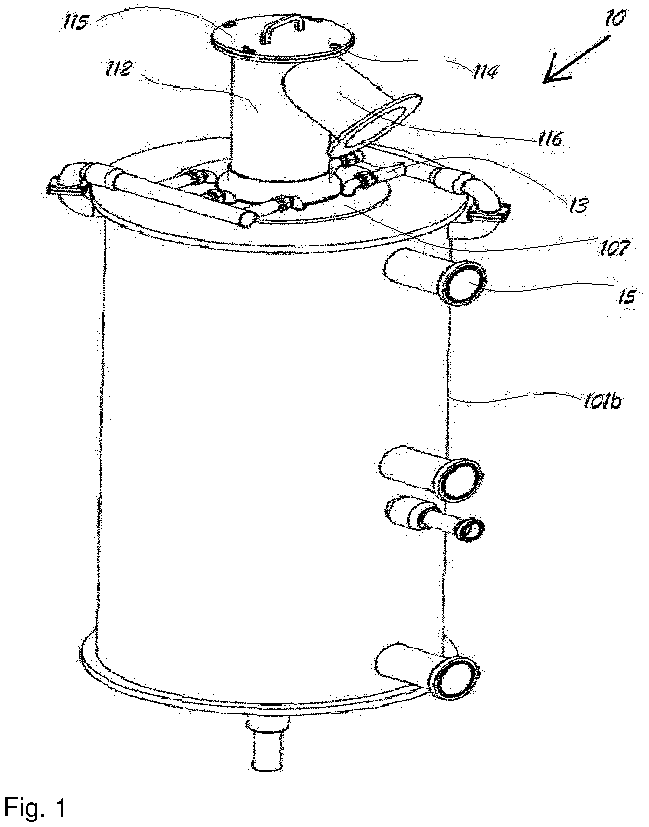

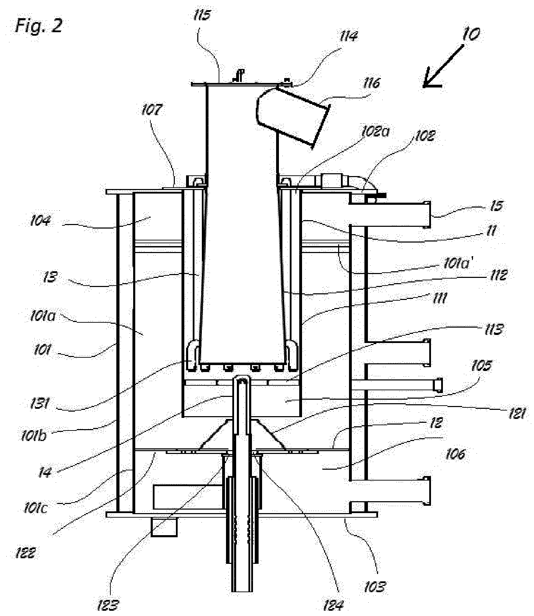

Figures 1 and 2 show a gasifier according to the invention. It comprises a frame 10, a fuel intake duct 11, a grate 12, and a gas outlet duct 15. Furthermore, the gasifier shown in Figs. 1 and 2 comprises outer combustion air ducts 13 and an inner combustion air duct 14. The fuel intake duct 11 as well as the outer combustion air ducts 13 and the inner combustion air duct 14 are fastened to the frame 10 of the gasifier by a fastening that allows the thermal expansion of the fuel intake duct 11 freely without stresses and deformations between the outer combustion air ducts 13 and the fuel intake duct.

In this embodiment, the frame 10 is formed of a cylindrical side wall 101 and an upper end wall 102 at its upper end and a lower end wall 103 at its lower end. The side wall 101 is made of an inner casing 101a, an outer casing 101b and an air preheating space 101c between these. The inner casing 101a has a resilient part 101a' which allows the thermal expansion of the inner casing 101a, heated during the use of the gasifier, with respect to the colder outer casing 101b. This reduces the stress states caused in the frame by temperature differences between its outer and inner surface. The inner temperature of the frame 10 can be divided, on the basis of its function, into a gas space 104, a pyrolysis space 105, and an ash space 106, from the top downwards. The ash space 106 and the pyrolysis space 105 are divided from each other by a grate 12. The gas space 104 is a space around the fuel intake duct 11, above the pyrolysis space 105, into which gas space the gas formed in the pyrolysis space 105 flows before it exits into the gas outlet duct 15. The different parts of the frame 10 are made of steel, except for the insulation layer to be formed on the outer surface of the outer casing 101b of the frame 10. The insulation layer consists of, for example, insulation wool (for example, 150 mm mineral/rock wool layer) or another suitable incombustible material that insulates heat better than steel.

For its part inside the frame, the fuel intake duct 11 consists of two parts, that is, a casing 111 and a central part 112. In this embodiment, both the casing 111 and the central part are rotationally symmetrical pieces made of a sheet-like material. The casing 111 has a cylindrical shape, and the central part is slightly conical in such a way that its lower part has a larger diameter than the upper part; in other words, it is downwards widening. The casing 11 extends closer to the grate 12 than the central part 112. The central part 112, in turn, extends above the upper end wall 102 as shown in Fig. 2. A blanking plate 113 is provided between the lower end of the central part 112 and the lower end of the casing 111, and fastened to the inner surface of the casing 11 as shown in Fig. 2. The upper end of the central part 112 extending outside the upper end wall 102 is provided with a flange 114 and a lid 115 fastened to the same, as well as an inlet 116 extending to the side of the upper part, through which inlet the solid fuel entering the gasifier is supplied into the central part 112.

Around the central part 112 of the fuel intake duct 11, between the casing 111 and the central part 112, several combustion air ducts 13 are provided next to each other and extend, like the fuel intake duct 11, through the upper end wall 102 to the inside of the frame 10, around the central part 112. The outer combustion air ducts 13 extend, in the height direction, between the blanking plate 113 and the lower end of the central part 112, as shown in Fig. 2. The outer combustion air ducts 13 are, in this embodiment, for example steel pipes whose ends are provided with nozzles 131 configured to guide the combustion air coming along the outer combustion air ducts to the fuel dripping from the inside of the central part 112 of the fuel intake duct 11.

The central part 112 of the fuel intake duct is fastened to a hole 102a formed in the upper end wall 102 by means of a ring-like fastening flange 107 in such a way that the joint between the hole 102a and the central part is gas tight. The fastening hole 102 has a diameter in the size of the outer diameter of the casing 111. The casing 111 is welded around a central hole 107 in the fastening flange in such a way that the casing 111 and the central part 112 can be fitted through the hole 102a into the frame 10 when the gasifier is assembled. The fastening flange 107 also comprises fastening holes 107b for the outer combustion air ducts, through which holes the outer combustion air ducts 13 made of steel pipes having a suitable thickness are fitted through the fastening flange 107, and in which holes the outer combustion air ducts 13 are fastened, for example by soldering or welding. In this embodiment of the gasifier, the casing 111 and the central part 112 of the fuel intake duct 11 as well as the outer combustion air ducts 13 are not fastened to each other or to the frame in any other way than by means of the fastening flange 107 at the upper end wall 102. The fastening flange 107 itself is fastened around the hole 102 in the upper end wall 102 by means of *e.g*. a screw fastening, wherein the fastening flange and the fuel intake channel 11 fixed to it and the outer combustion air ducts 13 can be removed from the frame and, for example, cleaned, maintained or replaced by unscrewing the fixing screws of the fastening flange 107. A suitable heat resistant gasket can be provided between the fastening flange 107 and the upper end wall 102, for securing the gas tightness of this joint.

The inner combustion air duct 14 extends through the lower end wall 103 to the ash space and from there through the grate 12 between the blanking plate 113 and the lower end of the central part 112 of the fuel intake duct 11, approximately to the same location as the outer combustion air ducts 13. The inner combustion air duct 14 has an end that guides the combustion air to the fuel on the blanking plate 113 from the side of the hole in the blanking plate 113. In this way, the inner combustion air duct 14 and the outer combustion air ducts 13 secure that combustion air is supplied as evenly as possible to the fuel on the blanking plate 113. The inner combustion air duct 14 is, for example, a steel pipe that is fastened solely to the lower end wall 103 at the section extending through the lower end wall 103. Thanks to such a fastening, no stress states caused by temperature differences are generated between the inner combustion air duct and the other parts of the gasifier.

The function of the grate 12 is to prevent ungasified fuel from dropping into the ash space before it has been completely turned to ash and gas. In this embodiment, the central part of the grate 12 comprises a guide cone 121 for guiding the fuel and gas dropping from above in such a way that the gas flows from the pyrolysis space 105 to the gas space 106, and the fuel that has been partly or completely turned to ash, drops onto the grate 12. The grate 12 is fastened to the side wall 101 of the frame 10, as shown in Fig. 2, by means of a ring-like fastening plate 122, and a central piece 123 is provided in the centre of the grate, below the guide cone. The inner combustion air duct 14 extends via an opening 124 in the centre of the central piece 123 from the ash space 104 to the pyrolysis space 105.

When using the gasifier according to Figs. 1 and 2, solid fuel is supplied from the outside of the gasifier via an inlet 116 at the end of the fuel intake duct 11 to the central part 112 of the fuel intake duct 11. In this way, the fuel drops through the central part 112 to the pyrolysis space 105, onto the blanking plate 113 and onto the grate 12. The fuel comprises, for example, wood chips or pellets, or another solid wood or biomass based fuel suitable for generating wood gas. The solid fuel in the pyrolysis space 105 is ignited, for example, by means of an electric resistor, a glow plug, or a hot-air blower. After the ignition of the fuel, combustion air is supplied into the pyrolysis space 105 in a limited way so that the fuel does not burn completely but is merely gasified. From the completely gasified fuel, ash and product gas are formed (containing about 25% carbon monoxide, about 18% hydrogen, and about 3% methane). The ash drops onto the grate where it crumbles to finer grains and then drops into the ash space. The wood gas, however, flows upwards inside the frame to the gas space and from there via a gas exhaust duct 15 to the outside of the gasifier, to be purified and used, for example, as fuel for a combustion engine. The gas flow is produced in the gasifier by pumps, blowers, or e.g. underpressure caused by an engine downstream of the gasifier.

Thanks to the central part of the fuel intake duct of the gasifier widening downwards, fuel does not easily adhere to the walls of the central part but drops by the effect of gravity onto the blanking plate 113 and into the pyrolysis space 105. During pyrolysis, heat is produced in the pyrolysis space 105, heating both the central part 112 and the casing 111. Thus, the outer combustion air ducts 13 between these, as well as the combustion air flowing in the ducts, are heated before the combustion air exits the outer combustion air ducts 13 through the nozzles 131. The inner combustion air duct 14 is also heated, because it extends between the blanking plate 113 and the end of the central part 112, through the ash space 106 and the lower part of the pyrolysis space 105. Because the combustion air ducts 13 and 14 as well as the fuel intake duct 11 are fastened to the frame at the upper end wall 102 only, the fuel intake duct 11 that is heated during the use of the gasifier is allowed to elongate due to its thermal expansion, irrespective of the outer combustion air ducts 13. As a result, no stresses are caused between the fuel intake duct 11 and the outer combustion air ducts 13 as in the gasifiers of prior art, in which the outer combustion air ducts were fastened to both the upper end wall of the frame and the end of the fuel intake duct.

In many respects, the gasifier according to the invention can be implemented in a way different from the above-presented example embodiment. For example, the shape and the size of the frame of the gasifier, as well as the number of combustion air ducts and the structure of the fuel intake duct may vary. In some embodiments, however, the fuel intake duct and the outer combustion air ducts may also be supported to each other at their lower end and/or between the lower and upper ends. In any case, the fastening is always such that it merely supports the fuel intake duct primarily in its cross direction, but allows the free thermal expansion and extension of the fuel intake duct without the formation of stresses between the fuel intake duct and the outer combustion air ducts. Consequently, the gasifier according to the invention is not limited to the advantageous embodiments presented above, but it may vary within the scope of the appended claims.

## Claims

1. A gasifier for gasifying solid fuel, the gasifier comprising a container-like frame (10), a pyrolysis space (105) inside the frame (10), as well as a fuel intake duct (11) and at least one combustion air duct (13, 14) extending from the outside of the frame (10) to the pyrolysis space (105), and wherein
- frame (10) comprises a side wall (101), an upper end wall (102), and a lower end wall (103),
- combustion air ducts (13, 14) comprise at least one outer combustion air duct (13) extending from the outside of the frame (10) through the upper end wall (102) of the frame (10) to the inside of the frame (10),
- the fuel intake duct (11) and the combustion air ducts (13, 14) are fastened to the frame (10) by a fastening (102a, 107) that allows the thermal expansion of the fuel intake duct (11) without stresses and deformations generated between the combustion air ducts (13, 14) and the fuel intake duct (11), **characterized in that** the fuel intake duct (11) and the outer combustion air ducts (13) are mounted on a fastening flange (107) fastened in a detachable manner to a fastening hole (102) in the upper end wall (102).

2. The gasifier according to claim 1, **characterized in that** the fuel intake duct (11) and the outer combustion air ducts (13) extend, inside the frame, from the top downwards to the pyrolysis space (105) between the upper end wall (102) and the lower end wall (13).

3. The gasifier according to claim 1 or 2, **characterized in that** the fuel intake duct (11) comprises a central part (112) and a casing (111) outside the same.

4. The gasifier according to claim 3, **characterized in that** the fuel is configured to be supplied into the central part (112).

5. The gasifier according to claim 4, **characterized in that** the central part (112) becomes wider in the downwards direction.

6. The gasifier according to claim 5, **characterized in that** the casing (111) extends further down that the central part (112) inside the frame (10).

7. The gasifier according to claim 6, **characterized in that** the outer combustion air ducts (13) are placed between the central part (112) and the casing (111).

## Patentansprüche

1. Ein Vergaser zum Vergasen von festem Kraftstoff, wobei der Vergaser einen behälterähnlichen Rahmen (10), einen Pyrolyseraum (105) in dem Rahmen (10) sowie einen Kraftstoffansaugkanal (11) und mindestens einen Verbrennungsluftkanal (13, 14) aufweist, der von außerhalb des Rahmens (10) zum Pyrolyseraum (105) verläuft, und wobei
- der Rahmen (10) eine Seitenwand (101), eine obere Stirnwand (102) und eine untere Stirnwand (103) aufweist,
- Verbrennungsluftkanäle (13, 14) mindestens einen äußeren Verbrennungsluftkanal (13) aufweisen, der von außerhalb des Rahmens (10) durch die obere Stirnwand (102) des Rahmens (10) zum Inneren des Rahmens (10) verläuft,
- der Kraftstoffansaugkanal (11) und die Verbrennungsluftkanäle (13, 14) an dem Rahmen (10) mittels einer Befestigung (102a, 107), welche die Wärmeausdehnung des Kraftstoffansaugkanals (11) ermöglicht, befestigt sind, ohne dass Belastungen und Verformungen zwischen den Verbrennungsluftkanälen (13, 14) und dem Kraftstoffansaugkanal (11) erzeugt werden, **dadurch gekennzeichnet, dass** der Kraftstoffansaugkanal (11) und die äußeren Verbrennungsluftkanäle (13) an einem Befestigungsflansch (107) befestigt sind, der in lösbarer Weise an einem Befestigungsloch (102) in der oberen Stirnwand (102) befestigt ist.

2. Vergaser gemäß Anspruch 1, **dadurch gekennzeichnet, dass** der Kraftstoffansaugkanal (11) und die äußeren Verbrennungsluftkanäle (13) in dem Rahmen von der Oberseite nach unten zu dem Pyrolyseraum (105) zwischen der oberen Stirnwand (102) und der unteren Stirnwand (13) verlaufen.

3. Vergaser gemäß Anspruch 1 oder 2, **dadurch gekennzeichnet, dass** der Kraftstoffansaugkanal (11) ein mittiges Teil (112) und ein Gehäuse (111) außerhalb davon aufweist.

4. Vergaser gemäß Anspruch 3, **dadurch gekennzeichnet, dass** der Kraftstoff konfiguriert ist, um in das mittige Teil (112) geleitet zu werden.

5. Vergaser gemäß Anspruch 4, **dadurch gekennzeichnet, dass** das mittige Teil (112) nach unten breiter wird.

6. Vergaser gemäß Anspruch 5, **dadurch gekennzeichnet, dass** das Gehäuse (111) weiter nach unten vom mittigen Teil (112) in dem Rahmen (10) verläuft.

7. Vergaser gemäß Anspruch 6, **dadurch gekennzeichnet, dass** die äußeren Verbrennungsluftkanäle (13) zwischen dem mittigen Teil (112) und dem Gehäuse (111) platziert sind.

## Revendications

1. Gazogène destiné à gazéifier un combustible solide, le gazogène comprenant une armature de type récipient (10), un espace pour pyrolyse (105) à l'intérieur de l'armature (10), ainsi qu'un conduit d'admission de combustible (11) et au moins un conduit d'air de combustion (13, 14) s'étendant de l'extérieur de l'armature (10) vers l'espace pour pyrolyse (105), et dans lequel
- l'armature (10) comprend une paroi latérale (101), une paroi d'extrémité supérieure (102) et une paroi d'extrémité inférieure (103),
- les conduits d'air de combustion (13, 14) comprennent au moins un conduit d'air de combustion externe (13) s'étendant de l'extérieur de l'armature (10) à travers la paroi d'extrémité supérieure (102) de l'armature (10) vers l'intérieur de l'armature (10),
- le conduit d'admission de combustible (11) et les conduits d'air de combustion (13, 14) sont fixés à l'armature (10) par une fixation (102a, 107) qui permet la dilatation thermique du conduit d'admission de combustible (11) sans contraintes et déformations générées entre les conduits d'air de combustion (13, 14) et le conduit d'admission de combustible (11), **caractérisé en ce que** le conduit d'admission de combustible (11) et les conduits d'air de combustion externes (13) sont montés sur une bride de fixation (107) fixée de manière détachable à un orifice de fixation (102) dans la paroi d'extrémité supérieure (102).

2. Gazogène selon la revendication 1, **caractérisé en ce que** le conduit d'admission de combustible (11) et les conduits d'air de combustion externes (13) s'étendent, à l'intérieur de l'armature, de haut en bas vers l'espace pour pyrolyse (105) entre la paroi d'extrémité supérieure (102) et la paroi d'extrémité inférieure (13).

3. Gazogène selon la revendication 1 ou 2, **caractérisé en ce que** le conduit d'admission de combustible (11) comprend une partie centrale (112) et un boîtier (111) à l'extérieur de celle-ci.

4. Gazogène selon la revendication 3, **caractérisé en ce que** le combustible est configuré pour être approvisionné dans la partie centrale (112).

5. Gazogène selon la revendication 4, **caractérisé en ce que** la partie centrale (112) s'élargit dans la direction descendante.

6. Gazogène selon la revendication 5, **caractérisé en ce que** le boîtier (111) s'étend plus bas que la partie centrale (112) à l'intérieur de l'armature (10).

7. Gazogène selon la revendication 6, **caractérisé en ce que** les conduits d'air de combustion externes (13) sont placés entre la partie centrale (112) et le boîtier (111).
